# EUROPEAN PATENT APPLICATION

(11) **EP 4 672 520 A1**
(43) Date of publication of application: **31.12.2025**
(21) Application number: 25183557.5
(22) Date of filing: 18.06.2025
(51) Int. Cl.: H02B 1/015, H02B 1/04

(54) **GRID-CONNECTED DISTRIBUTION BOX**

(30) Priority: 25.06.2024 KR 20240083144
(71) Applicant: Hanwha Solutions Corporation, Jung-gu Seoul 04541 (KR)
(72) Inventor: SEO, Seong Won, 04541 Seoul (KR); HAM, Joung Hee, 04541 Seoul (KR); KIM, Kyung Hwan, 04541 Seoul (KR)
(74) Representative: Mooser, Sebastian Thomas

(57) **Abstract**

Provided is a grid-connected distribution box (1) including a case (10) having an internal space, a grid module (100) disposed in the internal space and having a main input terminal (110) into which main power is input and at least one output terminal (130, 150) connected to at least one load (Load1, Load2), a relay module (200) arranged at one side of the grid module (100), and a control module (300) disposed in the internal space and having a sub-input terminal (330, 350) to which at least one sub-power source (E1, E2) is input, and configured to provide the at least one sub-power source (E1, E2) to the relay module (200).

## Description

### TECHNICAL FIELD

The present disclosure relates to a grid-connected distribution box.

### BACKGROUND ART

As a distribution box is recognized as an electrical device for branching and distributing power to a plurality of power-receiving locations, the distribution box traditionally includes an external, metal case, a main circuit breaker connected to a power grid, a plurality of branch circuit breakers, and a busbar connecting these.

Recent distribution boxes have gone beyond simple power distribution functions and are realizing various intelligent functions depending on the purpose. For example, there is a grid-connected distribution box that is connected to a plurality of power grids and mutually supplies power.

However, since distribution boxes according to the related art are often assembled by assembling the components in the order of the production process, problems of misassembly due to the complex structure may occur, and even if a local failure occurs in a certain component, partial replacement is impossible.

### SUMMARY

The present disclosure provides a grid-connected distribution box that is connected to a plurality of power grids, and is modularized by function to facilitate manufacturing and installation, and has improved freedom of design.

According to an aspect of the present disclosure, there is provided a grid-connected distribution box including a case having an internal space, a grid module disposed in the internal space and having a main input terminal into which main power is input and at least one output terminal connected to at least one load, a relay module arranged at one side of the grid module, and a control module disposed in the internal space and having a sub-input terminal to which at least one sub-power source is input, and configured to provide the at least one sub-power source to the relay module.

In some embodiments, the grid module may have a first base body having steps such that the main input terminal and the at least one output terminal are arranged at different heights.

In some embodiments, the grid module may include a first mount having the main input terminal mounted thereon, a first step arranged under the first mount and having mounted thereon a first output terminal connected to a first load, and a second step arranged under the first step and having mounted thereon a second output terminal connected to a second load.

In some embodiments, the grid module may further include a first connector arranged on the first step and having one end connected to the first output terminal, and a second connector arranged on the second step and having one end connected to the second output terminal.

In some embodiments, the first connector and the second connector may have different lengths from each other.

In some embodiments, the first connector may have the other end bent upward.

In some embodiments, at least one of the first step and the second step may have an opening which extends longitudinally and through which the first connector or the second connector is inserted.

In some embodiments, the grid module may further include a second mount having the relay module mounted thereon and protruding from a surface of the second step.

In some embodiments, the grid module may further include a main input tab connecting the main input terminal to a first relay tab of the relay module.

In some embodiments, the grid module may further include a first current sensor arranged on the main input tab.

In some embodiments, the relay module may include a first relay having a first relay tab connected to a first connector, and a second relay having a second relay tab connected to a second connector, wherein the first relay and the second relay are stacked in the grid module.

In some embodiments, the relay module may have a spacer between the first relay and the second relay.

In some embodiments, the control module may include a first base plate and a sub-terminal mounting section which protrudes from one side of the first base plate in a height direction and on which the sub-input terminal is arranged.

In some embodiments, the sub-terminal mounting section may include a first sub-input terminal to which a first sub-power source is input and a second sub-input terminal to which a second sub-power source is input are arranged.

In some embodiments, the sub-terminal mounting section may have a protruding block protruding between the first sub-input terminal and the second sub-input terminal.

In some embodiments, the control module may further include a cutout portion which is arranged under the sub-terminal mounting section and into which a third base body of a neutral module is inserted.

In some embodiments, the control module may further include a neutral module disposed adjacent to the control module and having a neutral input terminal connected to the main power source and at least one neutral output terminal connected to the load.

In some embodiments, the neutral module may include a second base plate, a current sensor mounting section protruding from the second base plate and arranged to face the sub-input terminal of the control module, and a neutral terminal mounting section which is arranged at one side of the second base plate and on which the neutral input terminal is mounted.

In some embodiments, the current sensor mounting section may have a second current sensor arranged in a row with the sub-input terminal.

In some embodiments, the case may further include a transformer disposed in the internal space of the case, and a heat dissipation structure formed on a surface of the case, the surface facing the transformer.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a block diagram schematically illustrating a grid-connected distribution box according to an embodiment of the present disclosure;
FIG. 2 is a perspective view illustrating an example of the grid-connected distribution box of FIG. 1;
FIG. 3 is an exploded perspective view of a portion of the grid-connected distribution box of FIG. 2;
FIG. 4 is a diagram illustrating a grid module and a relay module of FIG. 3;
FIG. 5 is a diagram illustrating a cross-section of the grid module and the relay module that are assembled, when viewed from a direction V-V' of FIG. 3;
FIG. 6 is a diagram illustrating a control module of FIG. 3;
FIG. 7 is a diagram illustrating a neutral module of FIG. 3;
FIG. 8 is a diagram illustrating a cross-section of adjacent portions between the control module and the neutral module; and
FIG. 9 is a schematic diagram illustrating a circuit of the grid-connected distribution box of FIG. 2.

### DETAILED DESCRIPTION

As the present disclosure allows for various changes and numerous embodiments, particular embodiments will be illustrated in the drawings and described in detail in the written description. The effects and features of the present disclosure, and ways to achieve them will become apparent by referring to embodiments that will be described later in detail with reference to the drawings. However, the present disclosure is not limited to the following embodiments but may be embodied in various forms.

Hereinafter, embodiments of the present disclosure will be described in detail with reference to the attached drawings. When describing with reference to the drawings, identical or corresponding elements are given the same reference numerals and redundant descriptions thereof are omitted.

It will be understood that although the terms "first," "second," etc. may be used herein to describe various elements, these elements should not be limited by these terms. These terms are only used to distinguish one element from another.

Singular expressions, unless defined otherwise in the context, include plural expressions.

In the embodiments below, it will be further understood that the terms "comprise" and/or "have" used herein specify the presence of stated features or elements, but do not preclude the presence or addition of one or more other features or elements.

In the embodiments below, when a part such as a region, or element is described as being located above or on another part, this includes not only the case where the part is directly above the other part, but also the case where another region, element, etc. is therebetween.

Also, in the drawings, for convenience of description, sizes of elements may be exaggerated or contracted. For example, the size and thickness of each element shown in the drawings are arbitrarily shown for convenience of description, and therefore the present disclosure is not necessarily limited to the drawings.

In the embodiments below, when it is said that areas, elements, etc. are connected, it includes not only cases where the areas or elements are directly connected, but also cases where other the areas or elements are between the areas or elements and are indirectly connected.

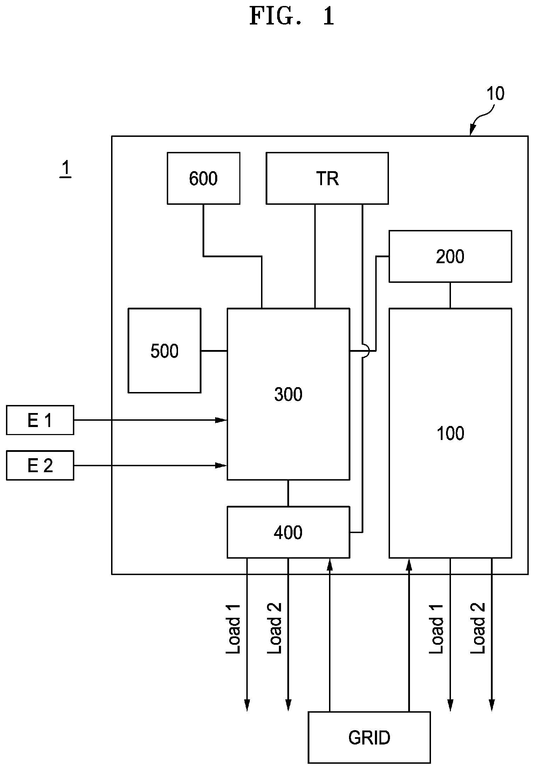

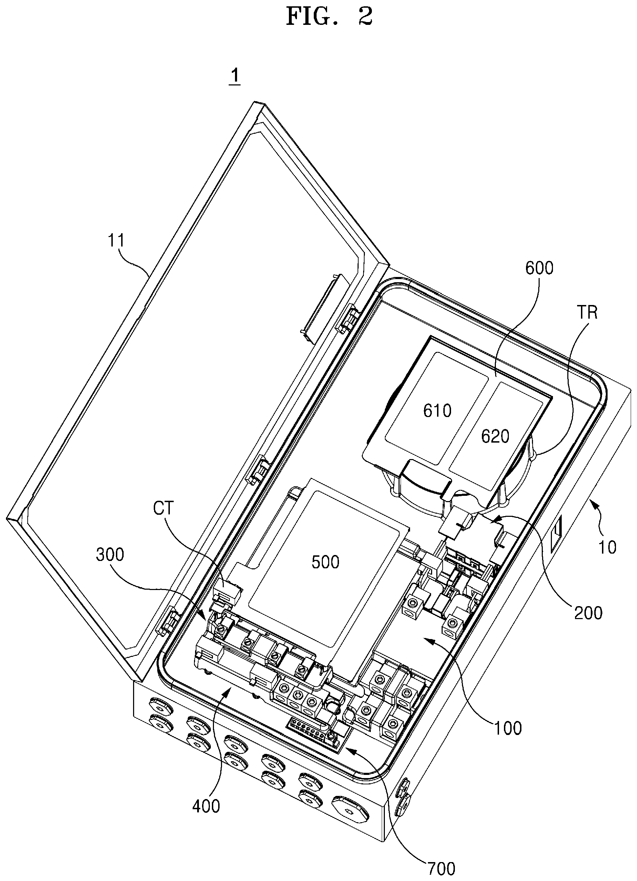

FIG. 1 is a block diagram schematically illustrating a grid-connected distribution box 1 according to an embodiment of the present disclosure, and FIG. 2 is a perspective view illustrating an implementation example of the grid-connected distribution box 1 of FIG. 1.

Referring to FIGS. 1 and 2, the grid-connected distribution box 1 includes a case 10 having an internal space that is opened and closed by a cover 11, and parts may be arranged in the internal space of the case 10.

The grid-connected distribution box 1 may include a grid module 100, a relay module 200, a control module 300, a neutral module 400, a blocking module 500, a communication module 600, and a transformer TR inside the case 10.

The grid module 100 may be arranged inside the case 10, connected to a main power source Grid, and may supply power to at least one load. The grid module 100 may be powered by the main power source Grid and distribute power to at least one load. For example, the grid module 100 may supply power to a first load Load1 and/or a second load Load2.

The relay module 200 may be arranged at one side of the grid module 100 and assembled with the grid module 100. The relay module 200 may be electrically connected to the control module 300. The relay module 200 may control power supply to the grid module 100 by the control module 300. The relay module 200 may switch connection or disconnection of a power circuit according to a control signal of the control module 300.

The control module 300 may be connected to at least one sub-power source. For example, the control module 300 may be connected to at least one of a first sub-power source E1 and a second sub-power source E2 to receive power.

The sub-power source may be provided as an emergency power source such as a generator unit, an inverter for a power generation system, or an energy storage system (ESS) unit. However, the present disclosure is not limited thereto, and any power supply device capable of supplying stable alternating current power to the control module 300 may be applied as the sub-power source.

The control module 300 may be connected to the relay module 200 and control power supplied from the sub-power source to be transmitted to the grid module 100 through the relay module 200. Via the control module 300, the grid module 100 may transmit power supplied from the sub-power source to the load.

The neutral module 400 may be electrically connected to the control module 300, but be arranged adjacent to the grid module 100. The neutral module 400 may be connected to an N line of the main power source Grid and an N line of the load to fix the N line.

In an embodiment, the grid module 100 may be connected to an L line of the main power source Grid and power may be input thereto, and the grid module 100 may be connected to an L line of the load (Load1 or Load2) to output power. Here, the neutral module 400 may be connected to a common N line of the main power source Grid to input power, and connected to the load (Load1, Load2) to output power. The grid-connected distribution box 1 may transmit and distribute power at a constant voltage by a phase voltage formed between the L line and the N line.

The blocking module 500 may include a typical circuit breaker and block movement of power in the grid-connected distribution box 1. The blocking module 500 may be electrically connected to the control module 300, and when an abnormality occurs in the power supply, the power supply may be stopped by the blocking module 500.

In an embodiment, the blocking module 500 may be arranged to overlap the control module 300. As illustrated in FIG. 2, as the blocking module 500 is arranged as a layer on the control module 300, the grid-connected distribution box 1 may have a simple internal structure and a compact size.

The communication module 600 may be electrically connected to the control module 300 and perform communication processing according to a control signal. The communication module 600 may include a switched-mode power supply (SMPS) board 610 for converting alternating current into direct current and an interface board 620 for signal processing between circuits.

The transformer TR may be arranged in the internal space of the case 10. For example, the transformer TR may include a conventional autotransformer. The transformer TR may be connected to the control module 300 and supply split-phase power to the first load Load1 and the second load Load2 in the grid module 100 according to a control signal.

A heat dissipation structure (not shown) may be formed on a surface of the case 10, the face facing the transformer TR. The heat dissipation structure may be provided in a shape integrated into the case 10. The heat dissipation structure may be provided to dissipate heat generated during operation of the transformer TR and other internal components to the outside. According to an embodiment, the communication module 600 may be arranged so as to overlap over the transformer TR. As illustrated in FIG. 2, as the communication module 600 is arranged as a layer on the transformer TR, the grid-connected distribution box 1 may have a simple internal structure and a compact size.

Optionally, the grid-connected distribution box 1 may further include a grounding module 700. The grounding module 700 may connect an electric circuit to the ground via a conductor wire and allow current to flow to the ground. The grounding module 700 may allow current to flow to the ground when an abnormal voltage occurs, thereby allowing a device to maintain a constant potential.

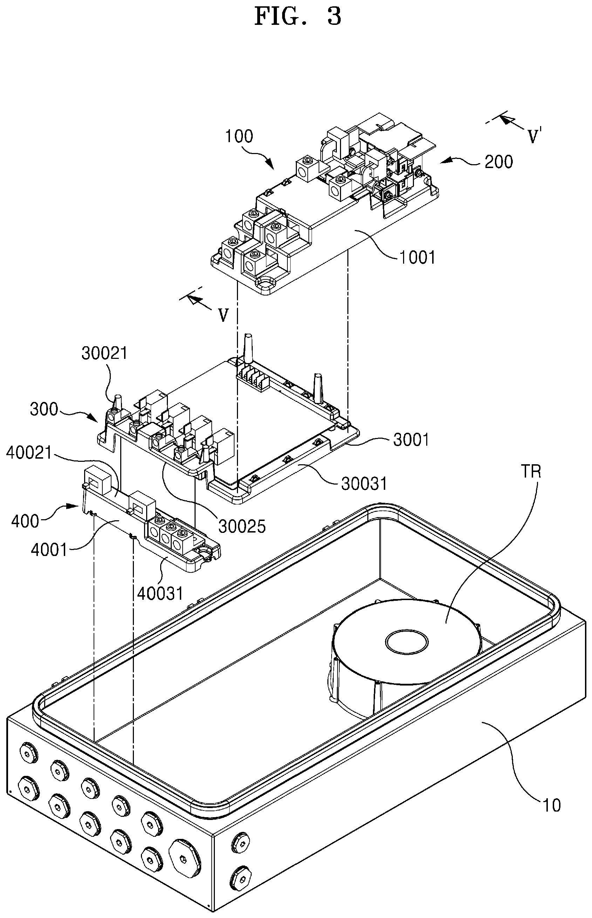

FIG. 3 is an exploded perspective view of a portion of the grid-connected distribution box 1 of FIG. 2.

Referring to FIG. 3, the grid module 100, the relay module 200, the control module 300, and the neutral module 400 may be arranged adjacent to each other.

For convenience of description, a side where the neutral module 400 is arranged in the grid-connected distribution box 1 is defined as a front side, and a side where the transformer TR is arranged is defined as a rear side.

The grid module 100 may have a first base body 1001, and the grid module 100 and the relay module 200 may be assembled such that the relay module 200 is mounted on one side of the first base body 1001.

The first base body 1001 may have steps. In some embodiments, the first base body 1001 may have a shape extending in a longitudinal direction of the case 10 and be arranged on the left side in the internal space of the case 10.

The control module 300 may have an approximately plate shape and be arranged on the right side of the internal space of the case 10. The control module 300 may be arranged parallel to the grid module 100 in the left and right directions.

The control module 300 may have a second base body 3001, and include, on a front side, a sub-terminal mounting section 30021 having a plurality of input terminals mounted thereon, and, on a lateral side thereof, a grid module-support section 30031 adjacent to the grid module 100.

The sub-terminal mounting section 30021 may protrude upward from a base surface of the second base body 3001. A cutout portion 30025 may be arranged under the sub-terminal mounting section 30021. The cutout portion 30025 may form a space introduced from the front side of the second base body 3001. A portion of a third base body 4001 of the neutral module 400 may be inserted into the cutout portion 30025.

The grid module-support section 30031 may be provided in a block shape protruding upward from the base surface of the second base body 3001. The grid module-support section 30031 may be inserted into a lateral side of the first base body 1001.

According to an embodiment, the first base body 1001 and the second base body 3001 may have surfaces that face each other. The grid module-support section 30031 may be inserted into the right side of the first base body 1001. As a result, the grid module 100 and the control module 300 may overlap each other at least partially and be installed compactly.

The neutral module 400 may have a shape extending in a width direction of the case 10 and arranged on the front side in the internal space of the case 10. The neutral module 400 may be arranged adjacent to the control module 300 in forward and backward directions.

The neutral module 400 may have the third base body 4001 which includes, on one side thereof, a current sensor mounting section 40021, and, on the other side thereof, a neutral terminal mounting section 40031.

The current sensor mounting section 40021 may be arranged on one side of the front of the third base body 4001. The current sensor mounting section 40021 may be formed to protrude upward from a base surface of the third base body 4001.

The neutral terminal mounting section 40031 may be arranged at the other side of the third base body 4001. The neutral terminal mounting section 40031 may be provided on a base portion of the third base body 4001.

In the third base body 4001, a portion of a rear side of the current sensor mounting section 40021 may be inserted into the cutout portion 30025 of the second base body 3001.

According to an embodiment, the second base body 3001 and the third base body 4001 may have surfaces that face each other. A portion of the base portion of the third base body 4001 may be inserted into the cutout portion 30025 of the first base body 1001. Accordingly, the control module 300 and the neutral module 400 may overlap each other at least partially and be installed compactly.

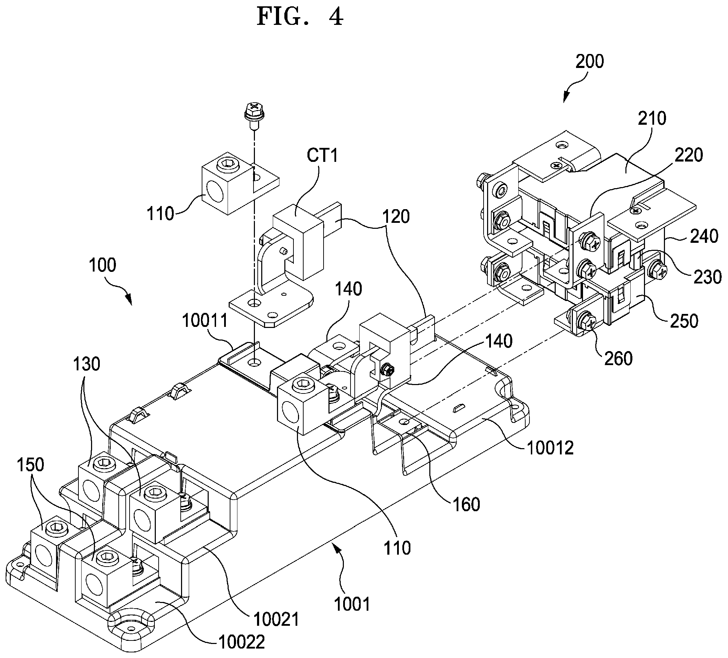

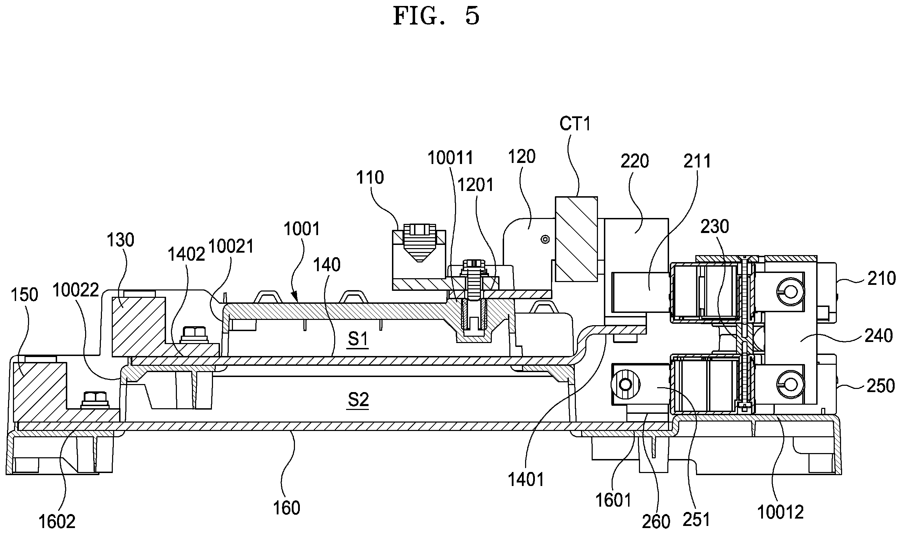

FIG. 4 is a diagram illustrating the grid module 100 and the relay module 200 of FIG. 3, and FIG. 5 is a diagram illustrating a cross-section of the grid module 100 and the relay module 200 that are assembled, when viewed from a direction V-V' of FIG. 3.

Referring to FIGS. 1 to 5, the grid module 100 and the relay module 200 may be assembled together to form an electric circuit.

The grid module 100 may include the first base body 1001 having steps, and a main input terminal 110 and one or more output terminals 130 and 150 arranged at different heights according to the steps.

The grid module 100 may include the main input terminal 110, a main input tab 120, a first output terminal 130, a first connector 140, a second output terminal 150, and a second connector 160.

According to an embodiment, the first base body 1001 may have a first mount 10011 forming an upper surface thereof, a first step 10021 arranged under the first mount 10011, and a second step 10022 arranged under the first step 10021.

The main input terminal 110 may be mounted on the first mount 10011, the first output terminal 130 may be mounted on the first step 10021, and the second output terminal 150 may be mounted on the second step 10022. That is, according to the structure of the first base body 1001, the main input terminal 110, the first output terminal 130, and the second output terminal 150 may be arranged at different heights, respectively.

In another embodiment, the main input terminal 110 may be arranged on one of the first step 10021 and the second step 10022, and the first output terminal 130 and the second output terminal 150 may be arranged on the other step and the first mount 10011, respectively.

The first base body 1001 may include an insulating material. Thus, the main input terminal 110, the first output terminal 130, and the second output terminal 150 installed on the first base body 1001 may form an electric circuit, and current leakage may be prevented.

The first base body 1001 may include heat-resistant and chemical-resistant materials. Thus, physical or chemical deformation of the first base body 1001 due to heat generated from the main input terminal 110, the first output terminal 130, and the second output terminal 150 installed on the first base body 1001 may be prevented.

The grid module 100 may form an electric circuit connected to the relay module 200 by the main input terminal 110, the main input tab 120, the first output terminal 130, the first connector 140, the second output terminal 150, and the second connector 160 installed on the first base body 1001.

The main input terminal 110 may be directly connected to the main power source Grid and power may be applied thereto. The main input terminal 110 may be connected to the L line of the main power source Grid. The main input terminal 110 may be connected to the relay module 200 by the main input tab 120.

The main input tab 120 may be arranged on the first mount 10011. The main input terminal 110 may be mounted on the main input tab 120. The main input tab 120 may have one end connected to the main input terminal 110 and the other end connected to a first relay tab 220 of the relay module 200. Power input to the main input terminal 110 may be transmitted to the relay module 200 through the main input tab 120.

As an example, the main input terminal 110 may have a plate-shaped tab-fixing portion 1201, and the tab-fixing portion 1201 may be arranged on the first mount 10011. The main input terminal 110 may be mounted on the tab-fixing portion 1201. The other end of the main input tab 120 may have a shape extending from the tab-fixing portion 1201 toward the first relay tab 220.

The main input tab 120 may further include a first current sensor CT1. A current input to the main input terminal 110 may be measured by the first current sensor CT1 at the main input tab 120.

The first output terminal 130 may be connected to the first load Load1 to supply power. The first output terminal 130 may be connected to the L line of the first load Load1. The first output terminal 130 may be connected to the relay module 200 by the first connector 140.

The first connector 140 may be arranged on the first step 10021. The first step 10021 may include a first opening S1 extending longitudinally such that the first connector 140 is inserted into the first opening S1. The first connector 140 may have a shape extending through the first opening S1.

The first connector 140 may have one end connected to the first relay tab 220 of the relay module 200 and the other end connected to the first output terminal 130. The first connector 140 may form, through the first relay tab 220, a circuit connecting the main input terminal 110 to the first output terminal 130. Accordingly, power supplied from the main power source Grid may be distributed to the first load Load1.

Specifically, the other end of the first connector 140 may be bent upward. The first connector 140 may have a bent end 1401 bent upward and a straight end 1402 extending in a straight line on the opposite side thereto. Due to the shape of the bent end 1401, the first connector 140 may be fastened to the first relay tab 220 above a bottom surface of the first step 10021, and may be at a relatively large distance from the second connector 160.

The second output terminal 150 may be connected to the second load Load2 to supply power. The second output terminal 150 may be connected to the L line of the second load Load2. The second output terminal 150 may be connected to the relay module 200 by the second connector 160.

The second connector 160 may be arranged on the second step 10022. The second step 10022 may include a second opening S2 extending longitudinally such that the second connector 160 is inserted into the second opening S2. The second connector 160 may have a shape extending through the second opening S2.

The second connector 160 may have one end connected to a second relay tab 260 of the relay module 200 and the other end connected to the second output terminal 150. The second connector 160 may form a circuit that connects the second output terminal 150 to the relay module 200, thereby allowing power transmitted through the relay module 200 to be distributed to the second load Load2.

In detail, the second connector 160 may include a linear terminal extending in two directions, and may have a relay-side end 1601 and a load terminal-side end 1602. The second connector 160 may be mounted on a bottom surface of the second step 10022 and be installed stably.

According to an embodiment, the second connector 160 may have a different length from that of the first connector 140. The length of the second connector 160 may be provided to be longer than the length of the first connector 140. A length of the second step 10022 in the first base body 1001 may be longer than a length of the first step 10021.

Accordingly, inside the case 10, the first output terminal 130 may be arranged behind the second output terminal 150, and on the opposite side thereto, the relay-side end 1601 of the second connector 160 may be arranged behind the bent end 1401 of the first connector 140.

Due to the shape of the first base body 1001 and a difference in the lengths between the connectors, during the assembly process of the grid module 100, an operation of assembling the second output terminal 150 to the second connector 160 and an operation of assembling the first output terminal 130 to the first connector 140 may be easily performed.

In some embodiments, during the assembly process of the grid module 100 and the relay module 200, an operation of connecting the second relay tab 260 to the relay-side end 1601 of the second connector 160 and an operation of connecting the first relay tab 220 to the bent end 1401 of the first connector 140 may be easily performed.

The first base body 1001 of the grid module 100 may further include a second mount 10012 protruding from a surface of the second step 10022. The second mount 10012 may support the relay module 200.

The relay module 200 may be assembled with the grid module 100 and secured to the second mount 10012, so that the assembled portion with respect to the grid module 100 may be stably supported.

When one side of the relay module 200 is assembled with the grid module 100, the other side thereof may be connected to the control module 300. The relay module 200 may receive power from the first sub-power source E1 or the second sub-power source E2, which are connected to the control module 300.

The relay module 200 may output power input to the main input terminal 110, to the first output terminal 130, and output power input by the control module 300, to the second output terminal 150. That is, the relay module 200 may separately include a circuit that supplies power from a main power source to a load and a circuit that supplies power from a sub-power source to the load.

The relay module 200 may include a first relay 210, the first relay tab 220, a spacer 230, a connection tab 240, a second relay 250, and the second relay tab 260.

The relay module 200 may have the first relay 210 and the second relay 250 that are stacked vertically. In the relay module 200, an electric circuit may be formed by connecting the first relay 210 to the first relay tab 220 and an electric circuit may be formed by connecting the second relay 250 to the second relay tab 260.

According to an embodiment, the first relay tab 220 may be assembled to a first relay tab supporter 211 of the first relay 210. As the first relay tab 220 connects the main input tab 120 of the grid module 100 to the first connector 140, a power supply circuit of the main power source Grid may be formed.

The second relay 250 may assemble the second relay tab 260 to a second relay tab supporter 251. As the second relay tab 260 is connected to the second connector 160 of the grid module 100, a power supply circuit of the first sub-power source E1 or the second sub-power source E2 transmitted from the control module 300 to the relay module 200 may be formed.

The connection tab 240 may have a shape extending in a vertical direction and connect the first relay 210 to the second relay 250. The spacer 230 may be arranged between the first relay 210 and the second relay 250 to support the first relay 210 and the second relay 250 and maintain a separation space therebetween.

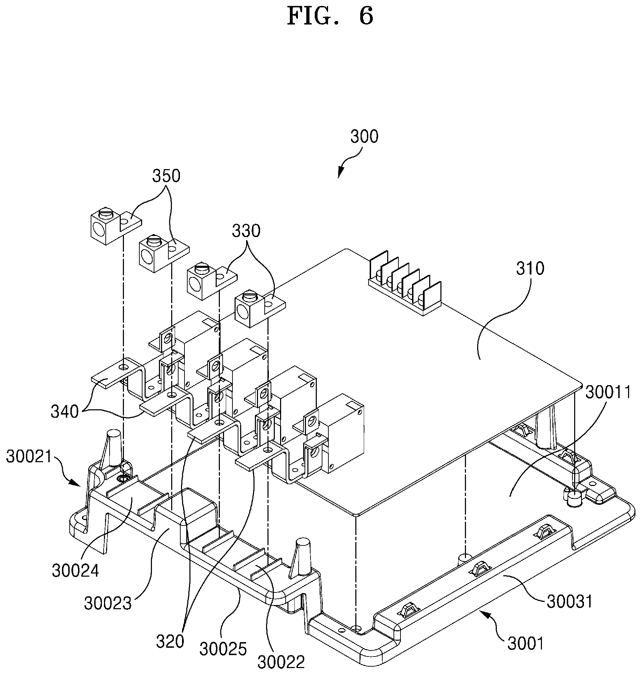

FIG. 6 is a diagram illustrating the control module 300 of FIG. 3.

Referring to FIG. 1 and FIG. 6, the control module 300 may include the second base body 3001 and a control board 310, a first sub-input tab 320, a first sub-input terminal 330, a second sub-input tab 340, and a second sub-input terminal 350 disposed thereon.

The second base body 3001 may include an insulating material. Thus, the control board 310, the first sub-input terminal 330, and the second sub-input terminal 350 installed on the second base body 3001 may form an electric circuit, and current leakage may be prevented.

The second base body 3001 may include heat-resistant and chemical-resistant materials. Thus, physical or chemical deformation of the second base body 3001 due to heat generated from the control board 310, the first sub-input terminal 330, and the second sub-input terminal 350 installed on the second base body 3001 may be prevented.

According to an embodiment, the second base body 3001 may include a first base plate 30011, a sub-terminal mounting section 30021, and a grid module-support section 30031. The description of the cutout portion 30025 of the sub-terminal mounting section 30021 and the grid module-support section 30031 is omitted below as it has been described above with reference to FIG. 3.

The first base plate 30011 may have a flat shape, and the control board 310 may be arranged on the first base plate 30011.

The control board 310 may include a circuit board that generates an electrical signal for controlling the grid-connected distribution box 1. The control board 310 may generate control signals for the grid module 100, the relay module 200, the control module 300, the neutral module 400, the blocking module 500, the communication module 600, and the transformer TR.

For example, the control board 310 may measure a sub-power that is input from the first sub-input terminal 330 and the second sub-input terminal 350. In some embodiments, the control board 310 may control power transmitted to the load by controlling the relay module 200 to switch the power supply circuit. In some embodiments, the grid module 100 may control the blocking module 500 to block current when an abnormality occurs in the current that is input or output to or from the grid module 100 and the neutral module 400. In some embodiments, the control board 310 may control the transformer TR to transform the current input or output to or from the grid-connected distribution box 1.

The sub-terminal mounting section 30021 may protrude in a height direction from one side of the first base plate 30011 and support the first sub-input terminal 330 and the second sub-input terminal 350. Specifically, the sub-terminal mounting section 30021 may include a first sub-terminal mounting section 30022 and a second sub-terminal mounting section 30024.

The first sub-input terminal 330 may be arranged on the first sub-terminal mounting section 30022, and the second sub-input terminal 350 may be arranged on the second sub-terminal mounting section 30024.

A protruding block 30023 may be arranged between the first sub-terminal mounting section 30022 and the second sub-terminal mounting section 30024. The protruding block 30023 may protrude from a surface of the sub-terminal mounting section 30021.

The protruding block 30023 may define the first sub-terminal mounting section 30022 and the second sub-terminal mounting section 30024. The first sub-input terminal 330 and the second sub-input terminal 350 may be supported on the sub-terminal mounting section 30021 by the protruding block 30023 to be fixed in place. In some embodiments, the first sub-input terminal 330 and the second sub-input terminal 350 may be separated from each other by the protruding block 30023, thereby preventing interference between circuits.

According to an embodiment, power may be input to the control module 300 through the first sub-input tab 320, the first sub-input terminal 330, the second sub-input tab 340, and the second sub-input terminal 350.

The first sub-input terminal 330 may be connected to the first sub-power source E1 and power may be applied thereto. The first sub-input terminal 330 may be connected to an L line of the first sub-power source E1. The first sub-input terminal 330 may be installed on the first sub-input tab 320.

The first sub-input tab 320 may be arranged on the first sub-terminal mounting section 30022. The first sub-input tab 320 may have one end connected to the first sub-input terminal 330 and the other end connected to the control board 310. In some embodiments, the first sub-input tab 320 may be connected to the relay module 200 via a conductor wire and form, under the control by the control board 310, a circuit transmitted to the relay module 200.

The second sub-input terminal 350 may be connected to the second sub-power source E2 and power may be applied thereto. The second sub-input terminal 350 may be connected to an L line of the second sub-power source E2. The second sub-input terminal 350 may be installed on the second sub-input tab 340.

The second sub-input tab 340 may be arranged on the second sub-terminal mounting section 30024. The second sub-input tab 340 may have one end connected to the second sub-input terminal 350 and the other end connected to the control board 310. In some embodiments, the second sub-input tab 340 may be connected to the relay module 200 via a conductor wire, and form, under the control by the control board 310, a circuit transmitted to the relay module 200.

In an embodiment, the first sub-input tab 320 and the second sub-input tab 340 may be bent upward. The first sub-input tab 320 and the second sub-input tab 340 may be bent according to the shape of the sub-terminal mounting section 30021 such that one ends thereof are arranged on the sub-terminal mounting section 30021 and the other ends thereof are arranged on the control board 310.

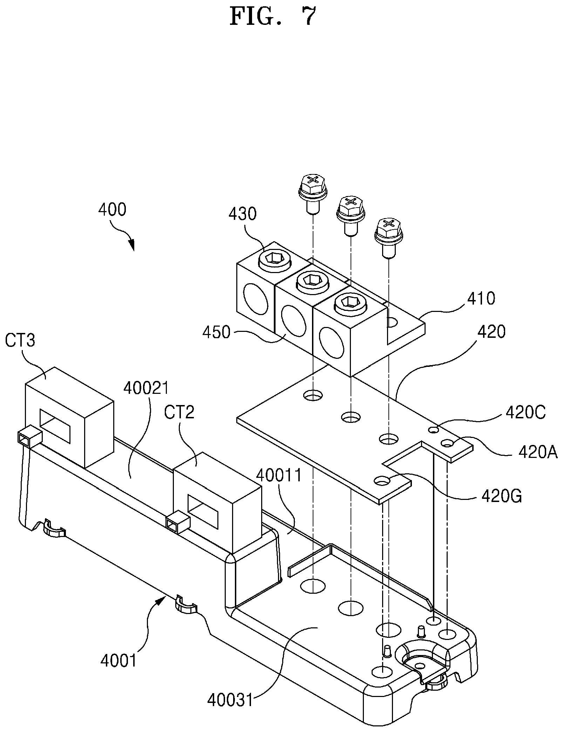

FIG. 7 is a diagram illustrating the neutral module 400 of FIG. 3.

Referring to FIG. 1 and FIG. 7, the neutral module 400 may include the third base body 4001, a neutral input terminal 410, a neutral connection tab 420, a first neutral output terminal 430, and a second neutral output terminal 450 disposed thereon.

The neutral module 400 may be arranged adjacent to the control module 300 and have the neutral input terminal 410 connected to the main power source Grid and at least one neutral output terminal 430 or 450 connected to at least one load.

The third base body 4001 may include an insulating material. Thus, the neutral input terminal 410, the first neutral output terminal 430, and the second neutral output terminal 450 installed on the third base body 4001 may form an electric circuit, and current leakage may be prevented.

The third base body 4001 may include heat-resistant and chemical-resistant materials. Thus, physical or chemical deformation of the third base body 4001 due to heat generated from the neutral input terminal 410, the first neutral output terminal 430, and the second neutral output terminal 450 installed on the third base body 4001 may be prevented.

According to an embodiment, the third base body 4001 may include a second base plate 40011, the current sensor mounting section 40021, and a neutral terminal mounting section 40031.

The second base plate 40011 may have a flat shape extending left and right, and a portion thereof may be inserted into the cutout portion 30025 of the control module 300.

The current sensor mounting section 40021 may be formed such that a portion thereof protrudes from a surface of the second base plate 40011 in a height direction. The current sensor mounting section 40021 may support at least one current sensor. For example, a second current sensor CT2 and a third current sensor CT3 may be arranged on the current sensor mounting section 40021.

The neutral terminal mounting section 40031 may have a flat shape extending from the second base plate 40011 and form a space in which the neutral connection tab 420 is mounted.

The neutral connection tab 420 may be provided as a plate-shaped terminal having an area corresponding to the neutral terminal mounting section 40031, and the neutral input terminal 410, the first neutral output terminal 430, and the second neutral output terminal 450 may be mounted on the neutral connection tab 420.

The neutral input terminal 410 may be connected to the N line of the main power source Grid and neutral line current may be input thereto. The first neutral output terminal 430 may be connected to the L line of the first load Load1, and the second neutral output terminal 450 may be connected to the L line of the second load Load2, and thus neutral line current may be output to each load.

The neutral input terminal 410, the first neutral output terminal 430, and the second neutral output terminal 450 may be connected to the neutral connection tab 420 to form a circuit in which a neutral line current flows within the neutral module 400. Accordingly, the neutral line current supplied from the main power source Grid may be distributed to the first load Load1 and the second load Load2.

According to an embodiment, a controller connection portion 420C, a transformer connection portion 420A, and a ground connection portion 420G may be provided in edges of the neutral connection tab 420.

The controller connection portion 420C may be connected to the control board 310 of the control module 300, and accordingly, input or output of neutral line current into or from the neutral module 400 may be controlled. The transformer connection portion 420A may be connected to the transformer TR to transform a voltage of the neutral line current. The ground connection portion 420G may be connected to the grounding module 700 and cause the neutral line current to flow to the ground.

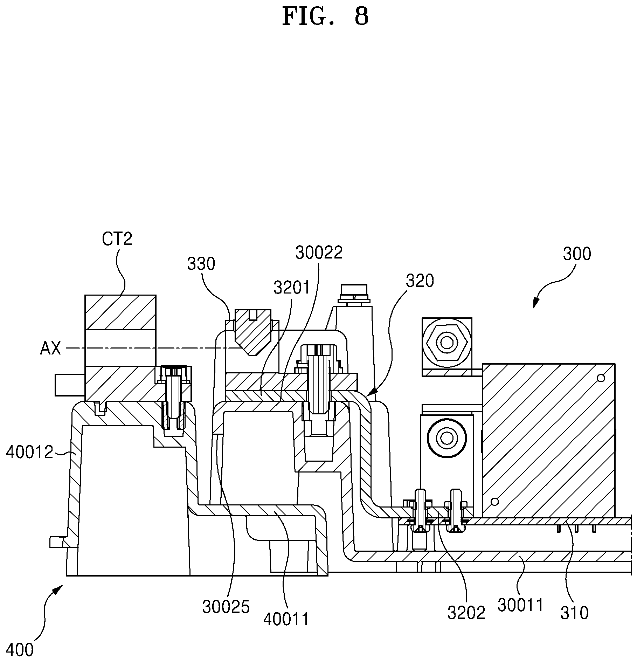

FIG. 8 is a diagram illustrating a cross-section of adjacent portions between the control module 300 and the neutral module 400. FIG. 8 illustrates a cross-section cut based on a mounting location of the second current sensor CT2 in the neutral module 400, and the description below may be equally applied to a mounting location of the third current sensor CT3.

Referring to FIG. 8, the control module 300 and the neutral module 400 may partially overlap each other and thus be arranged close to each other.

When the second base plate 40011 is inserted into the cutout portion 30025, the current sensor mounting section 40021 may be arranged to face the first sub-terminal mounting section 30022.

The second current sensor CT2 arranged on the current sensor mounting section 40021 may be arranged facing the first sub-input terminal 330 arranged on the first sub-terminal mounting section 30022. The second current sensor CT2 and the first sub-input terminal 330 may be installed in a straight line along a first axis AX.

According to an embodiment, a conductor wire connected from the first sub-power source E1 to the first sub-input terminal 330 may pass through the second current sensor CT2 and be connected to the first sub-input terminal 330. Power supplied from the first sub-power source E1 may be measured by the second current sensor CT2.

When current sensed by the second current sensor CT2 is normal, power supplied from the first sub-power source E1 may be input to the first sub-input terminal 330. If the second current sensor CT2 detects an abnormality such as overcurrent, the current to the first sub-input terminal 330 may be cut off.

As described above, when power is normally input to the first sub-input terminal 330, the power may be transmitted to the control board 310 connected to a control board-side end 3202, through a terminal-side end 3201 of the first sub-input tab 320.

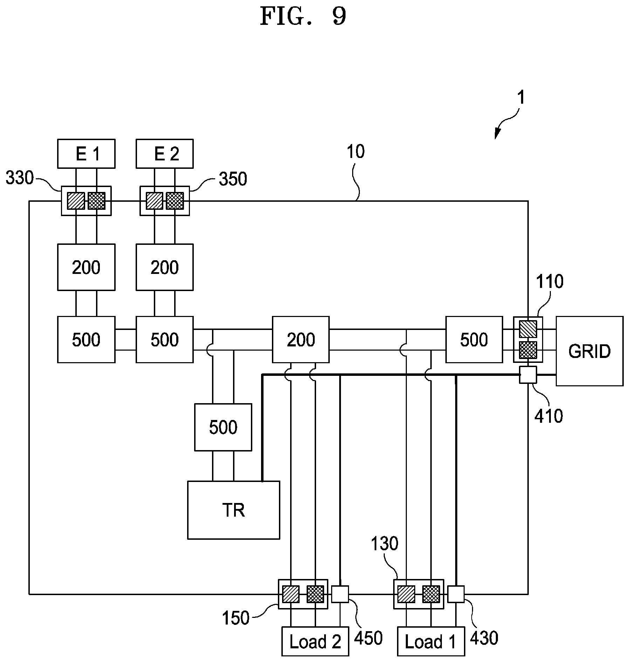

FIG. 9 is a diagram schematically showing a circuit of the grid-connected distribution box 1 of FIG. 2.

Referring to FIGS. 1 to 9, the grid-connected distribution box 1 may be connected to multiple power sources and mutually share power provided to multiple loads.

The grid-connected distribution box 1 according to an embodiment of the present disclosure may be separately include a circuit for supplying main power applied from the main power source Grid to the first load Load1 and a circuit for supplying sub-power applied from the first sub-power source E1 or the second sub-power source E2 to the second load Load2.

Here, the grid-connected distribution box 1 may include a plurality of current sensors (not shown) to sense errors in the circuit. The control module 300 may control the blocking module 500 based on results sensed by the current sensors to block a circuit section where a problem has occurred.

According to an embodiment, main power supplied from the main power source Grid may be input to the grid module 100 and the neutral module 400. Specifically, the L line of the main power source Grid may be connected to the main input terminal 110, and the common N line of the main power source Grid may be connected to the neutral input terminal 410.

As described above with reference to FIG. 7, the neutral module 400 may independently have a circuit that supplies power applied through the N line of the main power source Grid to the load. For example, power applied to the common N line of the main power source Grid may be input to the neutral input terminal 410, output to the first neutral output terminal 430 and supplied to the first load Load1, or output to the second neutral output terminal 450 and supplied to the second load Load2. Therefore, description of an N-line circuit of the neutral module 400 will be omitted below.

The grid-connected distribution box 1 may include a power supply circuit in which main power input to the main input terminal 110 is output to the first output terminal 130. Power may be supplied to the first load Load1 through a circuit connected from the main input terminal 110 to the first output terminal 130.

According to an embodiment, sub-power supplied from the first sub-power source E1 and the second sub-power source E2 may be input to the control module 300. Specifically, the L line of the first sub-power source E1 may be connected to the first sub-input terminal 330, and the L line of the second sub-power source E2 may be connected to the second sub-input terminal 350.

The grid-connected distribution box 1 may include a power supply circuit in which sub-power input to the first sub-input terminal 330 is output to the second output terminal 150 through the relay module 200. Power may be supplied to the second load Load2 through a circuit connected from the first sub-input terminal 330 to the second output terminal 150.

The grid-connected distribution box 1 may include a power supply circuit in which sub-power input to the second sub-input terminal 350 is output to the second output terminal 150 through the relay module 200. Power may be supplied to the second load Load2 through a circuit connected from the second sub-input terminal 350 to the second output terminal 150.

Accordingly, the grid-connected distribution box 1 may supply power to the second load Load2 by electrically connecting the relay module 200 to at least one of the first sub-power source E1 or the second sub-power source E2. Accordingly, the grid-connected distribution box 1 may stably supply power to the second load Load2 and prevent a power outage.

According to another embodiment, the grid-connected distribution box 1 may further include a power supply circuit in which main power input to the main input terminal 110 is output to the second output terminal 150 through the relay module 200. That is, the second load Load2 may receive power input from the main power source Grid, or may be supplied with power input from the first sub-power source E1 and the second sub-power source E2.

Accordingly, when a power outage occurs due to an abnormality in the main power source Grid that is constantly supplied, the grid-connected distribution box 1 may stably supply power to the second load Load2 through the first sub-power source E1 and the second sub-power source E2, and a power outage may be prevented.

According to the grid-connected distribution box according to an embodiment of the present disclosure, the production time may be shortened and efficiency and price competitiveness may be increased by modularizing the parts forming a distribution board by function.

According to the grid-connected distribution box of an embodiment of the present disclosure, when a problem occurs in a certain function of a distribution box, a corresponding module may be replaced, which improves convenience.

The grid-connected distribution box according to an embodiment of the present disclosure may be connected to a plurality of power grids, and when an abnormality occurs in one grid, the power supply path may be switched, and thus, power may be stably to important loads and the possibility of a power outage may be reduced and supply reliability may be improved.

Although the present disclosure has been described with reference to an embodiment shown in the attached drawings, this is merely an example, and those skilled in the art will understand that various modifications and equivalent other embodiments may be made therefrom. Therefore, the true scope of protection of the present disclosure should be determined solely by the appended claims.

## Claims

1. A grid-connected distribution box comprising:
a case having an internal space;
a grid module disposed in the internal space and having a main input terminal into which main power is input and at least one output terminal connected to at least one load;
a relay module arranged at one side of the grid module; and
a control module disposed in the internal space and having a sub-input terminal to which at least one sub-power source is input, and configured to provide the at least one sub-power source to the relay module.

2. The grid-connected distribution box of claim 1, wherein the grid module has a first base body having steps such that the main input terminal and the at least one output terminal are arranged at different heights.

3. The grid-connected distribution box of claim 1 or 2, wherein the grid module comprises:
a first mount having the main input terminal mounted thereon;
a first step arranged under the first mount and having mounted thereon a first output terminal connected to a first load; and
a second step arranged under the first step and having mounted thereon a second output terminal connected to a second load.

4. The grid-connected distribution box of claim 3, wherein the grid module further comprises:
a first connector arranged on the first step and having one end connected to the first output terminal; and
a second connector arranged on the second step and having one end connected to the second output terminal.

5. The grid-connected distribution box of claim 3 or 4, wherein at least one of the first step and the second step has an opening which extends longitudinally and through which the first connector or the second connector is inserted.

6. The grid-connected distribution box of any one of claims 3 to 5, wherein the grid module further comprises a second mount having the relay module mounted thereon and protruding from a surface of the second step.

7. The grid-connected distribution box of any one of claims 3 to 6, wherein the grid module further comprises a main input tab connecting the main input terminal to a first relay tab of the relay module.

8. The grid-connected distribution box of any one of claims 1 to 7, wherein the relay module comprises:
a first relay having a first relay tab connected to a first connector; and
a second relay having a second relay tab connected to a second connector,
wherein the first relay and the second relay are stacked in the grid module.

9. The grid-connected distribution box of claim 8, wherein the relay module comprises a spacer between the first relay and the second relay.

10. The grid-connected distribution box of any one of claims 1 to 9, wherein the control module comprises:
a first base plate; and
a sub-terminal mounting section which protrudes from one side of the first base plate in a height direction and on which the sub-input terminal is arranged.

11. The grid-connected distribution box of claim 10, wherein on the sub-terminal mounting section, a first sub-input terminal to which a first sub-power source is input and a second sub-input terminal to which a second sub-power source is input are arranged.

12. The grid-connected distribution box of claim 10 or 11, wherein the control module further comprises a cutout portion which is arranged under the sub-terminal mounting section and into which a third base body of a neutral module is inserted.

13. The grid-connected distribution box of any one of claims 1 to 12, further comprising a neutral module disposed adjacent to the control module and having a neutral input terminal connected to the main power source and at least one neutral output terminal connected to the load.

14. The grid-connected distribution box of claim 13, wherein the neutral module comprises:
a second base plate;
a current sensor mounting section protruding from the second base plate and arranged to face the sub-input terminal of the control module; and
a neutral terminal mounting section which is arranged at one side of the second base plate and on which the neutral input terminal is mounted.

15. The grid-connected distribution box of any one of claims 1 to 14, further comprising:
a transformer arranged in the internal space of the case; and
a heat dissipation structure formed on a surface of the case, the surface facing the transformer.
